Europäisches Patentamt

European Patent Office

Office européen des brevets

(19)

(11) Veröffentlichungsnummer: **0 162 961**

**A2**

(12) # EUROPÄISCHE PATENTANMELDUNG

(21) Anmeldenummer: **84115420.6**

(22) Anmeldetag: **14.12.84**

(51) Int. Cl.⁴: **G 02 B 7/18**

(30) Priorität: **27.04.84 DE 3415853**

(43) Veröffentlichungstag der Anmeldung:
**04.12.85 Patentblatt 85/49**

(84) Benannte Vertragsstaaten:
**AT BE CH DE FR GB IT LI LU NL SE**

(71) Anmelder: **Siemens Aktiengesellschaft**
**Berlin und München Wittelsbacherplatz 2**
**D-8000 München 2(DE)**

(72) Erfinder: **Dost, Willibald, Dipl.-Ing.(FH)**
**Schaffhauser Strasse 22/6**
**D-8000 München 71(DE)**

(72) Erfinder: **Habenschaden, K.,Dipl.-Ing.(FH)**
**Friesenstrasse 1**
**D-8031 Eichenau(DE)**

(72) Erfinder: **Kreutzer, Hans, Dipl.-Ing.(FH)**
**Ostmarkstrasse 20**
**D-8000 München 70(DE)**

(72) Erfinder: **Wasner, Günter**
**Immastrasse 20**
**D-8000 München 70(DE)**

(54) **Halterung für ein optisches Element.**

(57) Zur einfachen, dauerhaft sicheren Befestigung eines optischen Elementes (2), z.B. eines Reflektorspiegels, ohne Beeinträchtigung der Reinheit seiner Umgebung, ist ein topfförmiger Träger (1) vorgesehen, in dessen Ausschnitt (6) das optische Element durch formschlüssige Aufnahme seitlich fixiert ist, wobei als Klemmelement eine in den Träger einrastende Schenkelfeder (3) vorgesehen ist, welche unter Vorspannung an dem optischen Element anliegt. Damit wird eine schraubenlose, kitt- und klebfreie Klemmung erzielt. Die Erfindung ist allgemein zur Befestigung von optischen Elementen, insbesondere eines Spiegels oder eines Umkehrprismas bei einem optischen Resonator, geeignet.

FIG 1

EP 0 162 961 A2

Croydon Printing Company Ltd

0162961

Siemens Aktiengesellschaft          Unser Zeichen
Berlin und München                  VPA  84 P 1 3 3 6 E

Halterung für ein optisches Element

Die Erfindung betrifft eine Halterung für ein in einen
Strahlengang einfügbares optisches Element, z.B. einen
Reflektorspiegel oder ein Umlenkprisma, insbesondere für
einen optischen Resonator, mit einem topfförmigen Träger,
dessen Boden mit einem Durchbruch für den Strahlengang
und an der Innenseite mit einem Ausschnitt ausgebildet
ist, wobei das optische Element durch die Ausschnittwandung seitlich und mittels eines in den Träger einsetzbaren Klemmelementes in Richtung seiner optischen Achse fixiert ist.

Eine derartige Halterung ist aus der DE-OS 31 30 420 für
ein optisches Element, insbesondere für einen Reflektorspiegel eines Laserresonators, bekannt. Bei dieser Halterung ist das optische Element zwar leicht montierbar und
auswechselbar sowie in vielen Anwendungsfällen ausreichend
sicher gehalten, jedoch sind im Klemmbereich zwischen dem
Schraubverschluß und dem optischen Element noch geeignete
Andrück- und Dichtungselemente vorgesehen. Dadurch ist die
Halterung im Klemmbereich mehrteilig ausgebildet. Außerdem
ist bei Halterungen, deren Klemmung eine Schraubverbindung
oder zum Beispiel eine Klebe- oder Kittverbindung aufweist,
die Gefahr einer Verunreinigung der Umgebung des optischen
Elementes gegeben, so daß derartige Halterungen für bestimmte Anwendungsfälle, in denen eine unbedingte Reinhaltung der Umgebung des optischen Elementes erforderlich ist,
wie z.B. bei Gaslasern, weniger gut geeignet sind. Ferner
sind Halterungen mit Schraubverbindungen insbesondere im
mobilen Einsatz der Gefahr der Lockerung oder gar des Lö-

HB 1 Fra / 26.04.1984

sens ausgesetzt, so daß eine auf Dauer und auch im mobilen Einsatz sichere Befestigung des optischen Elementes nicht immer gewährleistet ist.

Der Erfindung liegt daher die Aufgabe zugrunde, eine Halterung der eingangs genannten Art so auszubilden, daß bei leichter Montier- und Demontierbarkeit des optischen Elementes ein einfacherer Aufbau und unabhängig von den Umgebungs- und Einsatzbedingungen eine universelle Verwendbarkeit der Halterung sowie eine dauerhaft sichere Befestigung des optischen Elementes gegeben ist.

Diese Aufgabe wird bei einer Halterung der eingangs genannten Art gemäß der Erfindung dadurch gelöst, daß der Träger im Bereich seiner freien Stirnseite an mehreren Stellen oder umlaufend mit einem nach innen gerichteten, eine Hinterschneidung bildenden Rand versehen ist, und daß das Klemmelement aus einer im Querschnitt U-förmigen Feder besteht, deren Federschenkel in die Hinterschneidung einrasten und deren zwischen den Federschenkeln eingeschlossener Boden unter Vorspannung an dem optischen Element anliegt.

Bei einer erfindungsgemäßen Halterung ist das im Bodenausschnitt des Trägers formschlüssig aufgenommene und dadurch mit ausreichender Genauigkeit seitlich fixierte optische Element in Richtung seiner optischen Achse mittels einer Feder fixiert, welche in die zwischen dem Boden und dem Rand des Trägers gebildete Kammer eingeschoben wird, so daß die Federschenkel in die Hinterschneidung einrasten. Der Federboden drückt dann mit seiner Vorspannkraft das optische Element gegen die Auflage in den Ausschnitt. Zur Befestigung des optischen Elementes ist somit neben der besonderen Gestaltung des Trägers lediglich ein einziges Klemmelement in Form einer Feder erforderlich. Damit ergibt sich ein einfacherer Aufbau der im Klemmbereich

0162961
84 P 1 3 3 6 E

nunmehr einteilig ausführbaren Halterung. Die Feder bewirkt eine dauerhaft sichere Befestigung des optischen Elementes, die auch für den mobilen Einsatz einer mit der erfindungsgemäßen Halterung versehenen Anordnung gut geeignet ist. Darüber hinaus stellt die Feder eine Klemmung ohne Schraub-, Kittoder Klebverbindungen dar, so daß die erfindungsgemäße Halterung auch bei hohen Reinhaltungsforderungen an die Umgebung des optischen Elementes einsatzfähig ist. Damit ist die erfindungsgemäße Halterung unabhängig von den Umgebungsund Einsatzbedingungen universell verwendbar. Eine Halterung mit einer Feder als einzigem Klemmelement ist außerdem leicht montier- und demontierbar.

Bei einer vorteilhaften Ausführungsform einer erfindungsgemäßen Halterung besteht die Feder aus einem topfförmig gestalteten Teil, dessen Federschenkel durch mehrere Schlitze am Umfang des Teiles gebildet sind. Dadurch ist die Feder der Form des Trägers angepaßt.

Um bei einer erfindungsgemäßen Halterung eine möglichst große Klemmwirkung der Feder zu erzielen, ist es vorteilhaft, wenn der Boden der Feder mit einer Ausnehmung mit mindestens jeweils zwei zueinander fluchtenden Federlappen ausgebildet ist.

Zur Erleichterung der Demontage ist es bei einer erfindungsgemäßen Halterung zweckmäßig, wenn der Rand des Trägers und der Träger selbst an der Innenseite mit von der freien Stirnseite her zugänglichen Vertiefungen ausgebildet sind. Dadurch können die Federschenkel mit einem entsprechend ausgebildeten Werkzeug ohne weiteres nach innen gedrückt werden, so daß die Feder leicht aus der Kammer entnommen werden kann. Hinsichtlich des Einsatzes der erfindungsgemäßen Halterung, insbesondere bei hohen Reinhaltungsforderungen, ist es zweckmäßig, wenn der Träger an der offenen Seite mit einer Abschlußplatte nach außen abgedichtet ist. Eine derartige Abschlußplatte kann in vorteilhafter Weise durch Schweißen oder Löten an dem Rand des Trägers befestigt werden.

Ein Ausführungsbeispiel einer erfindungsgemäßen Halterung ist im folgenden anhand der Zeichnung näher beschrieben.

Fig. 1   zeigt die Halterung mit ihren Einzelteilen in explosionsartiger, perspektivischer Darstellung,

Fig. 2   zeigt einen Schnitt II-II nach Fig.1.

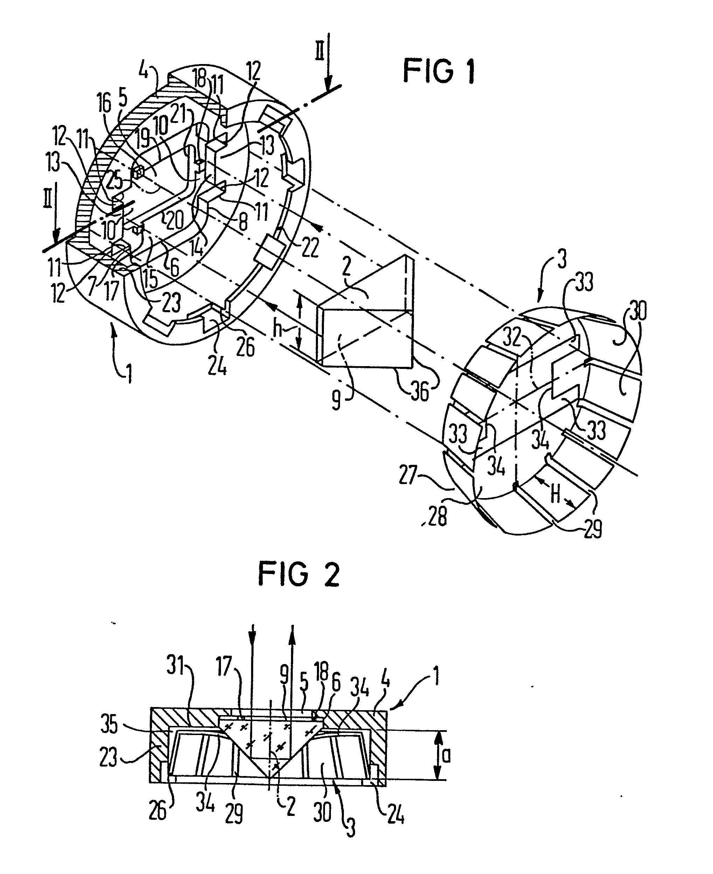

Die Halterung besteht aus einem Träger 1 zur Aufnahme eines hier beispielsweise als Umlenkprisma ausgebildeten optischen Elementes 2 sowie aus einem Klemmelement 3, welches das optische Element in dem Träger festklemmt. Der Träger 1 ist hier kreisrund und topfförmig ausgebildet und z.B. Bestandteil eines Gehäuses für einen optischen Resonator, z.B. eines Gaslasers. Der Boden 4 des Trägers ist mit einem hier rechteckförmigen Durchbruch 5 für den Strahlengang ausgebildet und an seiner Innenseite zur Aufnahme des optischen Elementes 2 mit einem im wesentlichen ebenfalls rechteckförmigen Ausschnitt 6 mit abgerundeten Ecken versehen. Zwei einander gegenüberliegende Seitenwände 7,8 des Ausschnitts 6 sind in einem der Höhe h der rechteckigen Grundfläche 9 des optischen Elementes entsprechenden Teilbereich 10 ihrer Länge so zurückversetzt, daß Stufen 11 gebildet sind. Damit umgrenzen die zurückversetzten Teilbereiche 10 mit ihrer Stirnfläche 14 und die Stufen 11 eine der rechteckigen Grundfläche 9 des optischen Elementes entsprechende Fläche, so daß das in den Ausschnitt 6 eingesetzte optische Element durch die Stirnflächen 14 und die Stufen 11 formschlüssig umfaßt und mit ausreichender Genauigkeit seitlich in seiner Lage fixiert ist. Da die rechteckige Grundfläche 9 des optischen Elementes scharfkantige Ecken aufweist, sind zwischen den Stirnflächen 14 und den entsprechenden Stufen 11 noch Ausnehmungen 12 in der aus Fig. 1 ersichtlichen Weise vorgesehen, die Stege 13 bilden, welche mit der Stirnfläche 14 gegenüber den Seitenwänden 7,8 des Ausschnitts zurückversetzt sind. Zur Auflage der rechteckigen Grundfläche 9 des optischen Elementes 2 in dem Ausschnitt 6 ist dessen Grundfläche 15 mit drei erhabenen, feinbearbeiteten Auflagestellen 16,17 und 18 ausgebildet, die hier am Rand des Durchbruchs 5 an den Ecken eines gleichschenkligen Dreiecks liegend angeordnet sind. Dabei liegen sich die Auflagestellen 16 und 17 an den parallelen Längsseiten 19 und 20 des Durchbruchs 5 gegenüber, während die dritte Auflagestelle 18 an der einen Schmalseite 21 des Durchbruchs angeordnet ist. Auf diese Weise ist die Lage des optischen Elementes zum Strahlengang mit hoher Genauigkeit bestimmt.

Der zur Aufnahme des optischen Elementes und dessen Halterung dienende Träger 1 weist an seiner freien, d.h. dem Boden 4 gegenüberliegenden Stirnseite einen umlaufenden, nach innen gerichteten Rand 22 auf, wobei sowohl der Rand als auch die Wandung 23 des Trägers selbst an der Innenseite mit Vertiefungen 24 versehen ist, die von der freien Stirnseite ausgehen und daher von dieser her zugänglich sind und sich in Richtung der Mittelachse 25 des Trägers erstrecken. Der Rand 22 bildet am Übergang zur Wandung 23 eine Hinterschneidung 26, welche zur Lagerung des Klemmelementes 3 dient. Das Klemmelement besteht bei der erfindungsgemäßen Halterung aus einer im Querschnitt U-förmigen Feder mit Federschenkeln und dazwischen eingeschlossenem Boden. Bei dem dargestellten Ausführungsbeispiel besteht die Feder aus einem topfförmig gestalteten kreisrunden Teil, dessen Außendurchmesser dem Innendurchmesser des Trägers angepaßt ist. Die Mantelfläche 27 der Feder 3 verläuft zum Federboden 28 kegelförmig und ist mit mehreren, am Umfang vorzugsweise gleichmäßig angeordneten und zueinander parallelen Schlitzen 29 in Richtung der Mittelachse 25 in einzelne Federschenkel 30 aufgeteilt, deren Höhe H etwa gleich oder kleiner dem Abstand a zwischen der Hinterschneidung 26 und der Innenseite 31 des Trägerbodens 4 ist. Der Federboden 28 ist mit einer im wesentlichen rechteckigen Ausnehmung 32 versehen, an deren Schmalseiten zwei zueinander fluchtende, durch Schlitze 33 gebildete Federlappen 34 vorgesehen sind. Zur Festklemmung des optischen Elementes 2 in dem Ausschnitt 6 des Trägers 1 wird die Feder 3 lagerichtig, d.h. so in die zwischen dem Boden 4 des Trägers und dem Rand 22 gebildete Kammer 35 eingeschoben, daß sich der Durchbruch 5 des Trägers und die Ausnehmung 32 der Feder decken. Beim Einschieben der Feder 3 in die Kammer 35 rasten die Federschenkel 30 in die Hinterschneidung 26 hinter dem Rand 22 des Trägers ein. Die Federlappen 34 des Federbodens werden dabei - am optischen Element, d.h. an dessen Seitenflächen 36 anliegend - aufgebogen und drücken dann mit ihrer Vorspannkraft das optische Element gegen die Auflagestellen 16, 17 und 18. Nunmehr ist das optische Element auch in Richtung seiner optischen Achse fixiert. Zum Lösen der Klemmung zwecks Demontage des optischen Elementes sind die sich am Umfang der Kammer 35 hinter jedem Federschenkel 30 befindlichen, in Fig. 1 jedoch nur in geringerer Stückzahl eingezeichneten Vertiefungen 24 vorgesehen, in die ein entsprechend ausgebildetes Werkzeug eingreifen kann. Mit dem Werkzeug werden die Federschenkel 30 nach innen gedrückt, so daß die Feder 3 aus der Kammer 35 entnommen werden kann. Hierzu muß gegebenenfalls erst noch eine hier nicht näher dargestellte Abschlußplatte entfernt werden, welche bei einer erfindungsgemäßen Halterung, insbesondere bei hohen Anforderungen an die Reinheit der Umgebung des optischen Elementes, zum vakuumdichten Verschließen der Kammer 35 vorgesehen werden kann. Die Abschlußplatte kann z.B. durch Schweißen am Rand 22 des Trägers befestigt werden.

Mit einer erfindungsgemäßen Halterung können auch andere optische Elemente als das dargestellte, z.B. ebene Spiegel, in dem Träger festgeklemmt werden. Die dargestellte Ausführungsform einer Topffeder kann dabei auch für einen ebenen Spiegel eingesetzt werden. Es sind aber auch andere Gestaltungen von Schenkelfedern denkbar, die dann abhängig vom optischen Element in geeigneter Weise im Querschnitt U-förmig ausgebildet werden.

9 Patentansprüche
2 Figuren

Patentansprüche

1. Halterung für ein in einen Strahlengang einfügbares optisches Element, z.B. einen Reflektorspiegel oder ein Umlenkprisma, insbesondere für einen optischen Resonator, mit einem topfförmigen Träger, dessen Boden mit einem Durchbruch für den Strahlengang und an der Innenseite mit einem Ausschnitt ausgebildet ist, wobei das optische Element durch die Ausschnittwandung seitlich und mittels eines in den Träger einsetzbaren Klemmelementes in Richtung seiner optischen Achse fixiert ist,
d a d u r c h   g e k e n n z e i c h n e t ,   daß der Träger (1) im Bereich seiner freien Stirnseite an mehreren Stellen oder umlaufend mit einem nach innen gerichteten, eine Hinterschneidung (26) bildenden Rand (22) versehen ist, und daß das Klemmelement (3) aus einer im Querschnitt U-förmigen Feder besteht, deren Federschenkel (30) in die Hinterschneidung (26) einrasten und deren zwischen den Federschenkeln eingeschlossener Boden (28) unter Vorspannung an dem optischen Element (2) anliegt.

2. Halterung nach Anspruch 1,
d a d u r c h   g e k e n n z e i c h n e t ,   daß die Feder aus einem topfförmig gestalteten Teil (3) besteht, dessen Federschenkel (30) durch mehrere Schlitze (29) am Umfang (27) des Teiles gebildet sind.

3. Halterung nach Anspruch 1 oder 2,
d a d u r c h   g e k e n n z e i c h n e t ,   daß der Boden (28) der Feder (3) mit einer Ausnehmung (32) mit mindestens jeweils zwei zueinander fluchtenden Federlappen (34) ausgebildet ist.

4. Halterung nach einem der Ansprüche 1 bis 3,
d a d u r c h   g e k e n n z e i c h n e t ,   daß die Federschenkel (30) konus- oder kegelförmig zum Federboden (28) verlaufen.

0162961
84 P 1 3 3 6 E

5. Halterung nach einem der vorhergehenden Ansprüche, d a d u r c h g e k e n n z e i c h n e t , daß die Höhe (H) der Federschenkel (30) etwa gleich oder kleiner dem Abstand (a) zwischen der Hinterschneidung (26) und der Innenseite (31) des Trägerbodens (4) ist.

6. Halterung nach einem der Ansprüche 2 bis 5, d a d u r c h g e k e n n z e i c h n e t , daß der Träger (1) und die Feder (3) kreisrund ausgebildet sind und der Außendurchmesser der Feder dem Innendurchmesser des Trägers angepaßt ist.

7. Halterung nach einem der vorhergehenden Ansprüche, d a d u r c h g e k e n n z e i c h n e t , daß der Rand (22) des Trägers (1) und der Träger (1) selbst an der Innenseite mit von der freien Stirnseite her zugänglichen Vertiefungen (24) ausgebildet sind.

8. Halterung nach einem der vorhergehenden Ansprüche, d a d u r c h g e k e n n z e i c h n e t , daß der Ausschnitt (6) des Trägers (1) mit drei feinbearbeiteten, an den Ecken eines gleichschenkligen Dreiecks angeordneten Auflagestellen (16,17,18) ausgebildet ist.

9. Halterung nach einem der vorhergehenden Ansprüche, d a d u r c h g e k e n n z e i c h n e t , daß der Träger (1) an der offenen Seite mit einer Abschlußplatte nach außen abgedichtet ist.

0162961

1/1

FIG 1

FIG 2